# EUROPEAN PATENT SPECIFICATION

(11) **EP 1 349 762 B1**
(45) Date of publication and mention of the grant of the patent: **31.05.2006**
(21) Application number: 01901636.9
(22) Date of filing: 10.01.2001
(51) Int. Cl.: B61B 9/00, B61B 13/00

(54) **VEHICLES TRANSIT APPARATUS**
FAHRZEUGBEFÖRDERUNGSVORRICHTUNG
APPAREIL DE TRANSIT

(43) Date of publication of application: 08.10.2003
(73) Proprietor: Andersson, Gert, 182 61 Djursholm (SE)
(72) Inventor: Andersson, Gert, 182 61 Djursholm (SE)
(74) Representative: Billberg, Hans
(86) International application number: PCT/SE2001/000033
(87) International publication number: WO 2002/055358

(56) References cited:
- WO-A1-99/58387
- CH-A5- 582 593
- FR-A- 619 659

## Description

A mass transit apparatus along a travelling path consisting of vehicles, each of which includes a diagonal vehicles beam and are articulately connected in configuration so that said vehicles can be folded to a side by side position from a linear position, said vehicles being connected to each other by means of distance beams pivotably connected to said vehicles at points located at both end parts of said vehicles, whereat horisontal steering means are arranged to cause said vehicles to pivot horisontally from said linear position to said side by side position and in reverse along certain parts of said travelling path, whereat drive or brake motor arrangements are arranged, one part of said arrangements being situated along said travelling path and co-operating with second parts of said arrangements mounted on each vehicle in order to brake and accelerate said vehicles respectively, the second part of said motor arrangements consist of at least one drive surface, which is extended from a main beam being attached to the vehicle and parallel to the travel direction of the vehicle, whereat said distance beam is swingable in the horizontal plane in relation to the main beam.

Traditionally, railways have been built with a design that allows for heavy weight transportation. Rail design, rail support design, bridges, vehicles of any kind, is heavy compared to automobile design concepts. A typical automobile mass is in the range of 1,5-2.0 tons empty while a typical mass transit subway vehicle weighs 30-40 tons. Similar relations are valid for freight versions in form of trucks (lorries) and railway freight cars. In addition, the prime movers for especially freight services are heavy with weights in excess of 100 tons per locomotive. Old steam locomotives had weights in the 200-300 ton range. The traditional railway technology evolution has been strongly influenced by the need to carry heavy loads. Similarly, automobile roads and bridges are designed for the heaviest load on the bridge and on the road surface, the trucks.

Operationally, trains are traditionally staffed with at least one driver. Cost for drivers was originally very small compared with the financial cost of the vehicles. This relation has however become smaller as the relative wage cost has increased and the relative financial cost for the vehicle has become smaller. This development has pushed the further designs into two directions, one being bigger and heavier trains equipped with one driver and in the other direction with smaller and lighter trains without drivers. Accordingly, driver-less systems have recently been developed and introduced commercially based on the introduction of newly available technology in the form of circuit and programming wise very sophisticated electronic supervision and control systems in order to maintain a public passenger transportation system, which is safe. Such safety approval procedures for a technically complex system as a public mass transit system are in itself exhausting.

Traditionally, energy cost considerations have been low compared to the advantages delivered by added features in new transportation systems. Global warming and the considerable consumption of fossil fuel should change the traditional design concepts. Energy conservation means of different forms are being used in traditional mass transit systems with acceleration and deceleration of 40-ton subway cars every 1.5 minutes that reaches up to 80-km/h speeds between the stations. Fundamentally, it would be better to decrease maximums speeds and decrease weights, while still maintaining similar total travel times by other means.

The current vehicle invention has been derived from a critical examination of the strengths and weaknesses of traditional and modern train technology. The fundamental strength of the steel rail and a steel wheel is in its low running resistance compared to rubber wheel and a solid surface. The fundamental weakness of traditional train technology is the heavy design, which is not needed for driver-less mass transit applications. The fundamental weakness in modern train technology is the dependence on a almost limitless application of electronic and chip-based systems for safety and operationally decisive subsystems such as the control of electric propulsion, all electric systems onboard, signal systems along the track, etc. These systems have become so complex in nature, which is causing accelerating costs for engineering, and in fact, the reliability is decreasing and start-up and commissioning issues become an ever-increasing challenge for the suppliers of such systems.

Based on the above critical issues, a new mass transit apparatus has been invented which addresses the advantages and disadvantages of the described fundamental issues and discloses the features of Claim 1.

The invented apparatus can be consecutively connected together to form a train, which can operate in distinctive train length formations or as a continuous train in a loop configuration where each vehicle is connected end to end in an endless configuration, see WO 99/58387 which corresponds to the preamble of Claim 1. The new features of the apparatus are found in the areas of its propulsion and brake system, which is moved from the vehicles to the stationary part of the system. The interface between the stationary propulsion and brake system and the vehicle part consists of a flat surface along the entire apparatus, in which each vehicle includes a beam system and a linkage according to claim 1. Further, certain inventions regarding the bogie and wheel arrangements and a platform for passenger embarkation and disembarkation has been invented. These features of the invention are stated in the claims.

An embodiment of the invention will be described with reference to the attached drawings.
Figure 1 is a view of an assembled vehicle on rails according to the invention.
Figure 2 is a view showing a vehicle arrangement according to the invention with the passenger compartment separated for better clarity.
Figure 3 is a view showing the vehicle structure without passenger compartment while travelling in a partly folded position

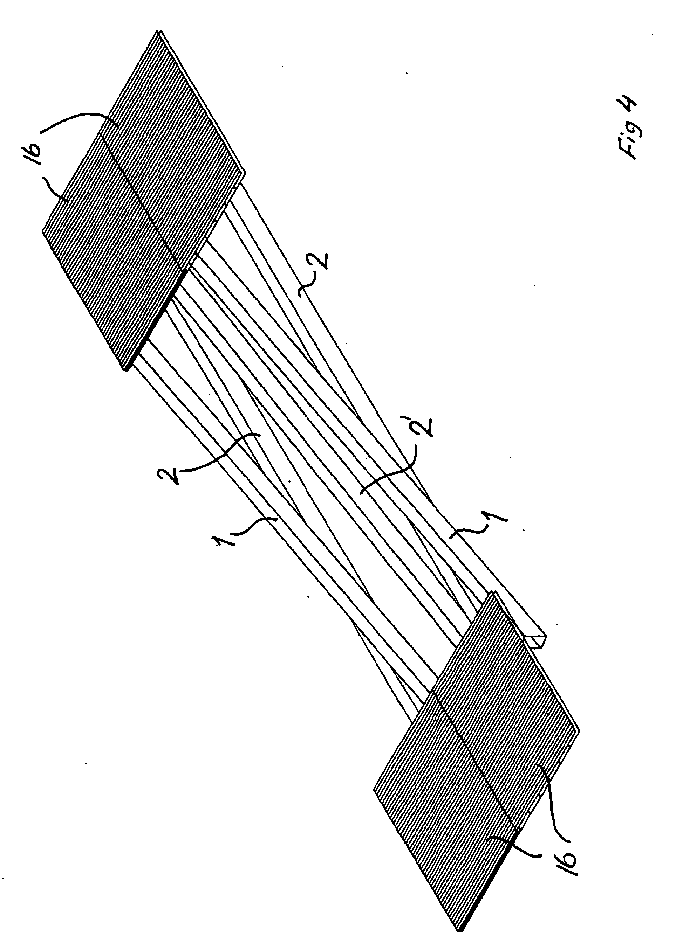

Figure 4 is a view showing the position of two completely folded vehicle structures with special focus on the position of the passenger platforms

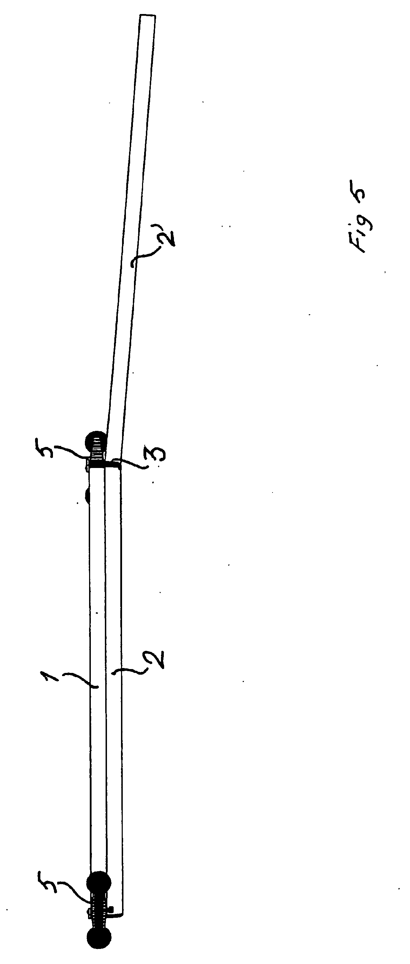

Figure 5 is a view showing the vehicle middle linkage capability for vertical angle deviations

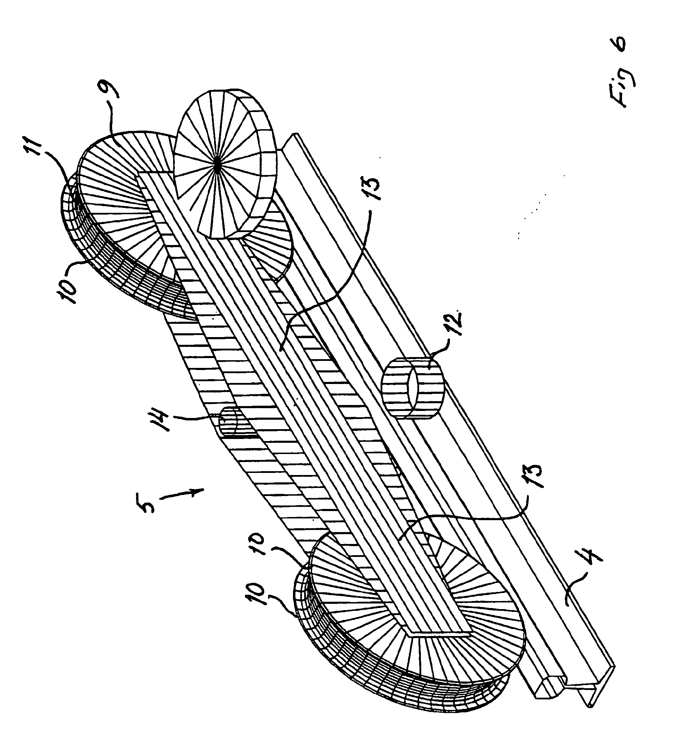

Figure 6 is a view showing a typical tandem wheel arrangement according to the invention.

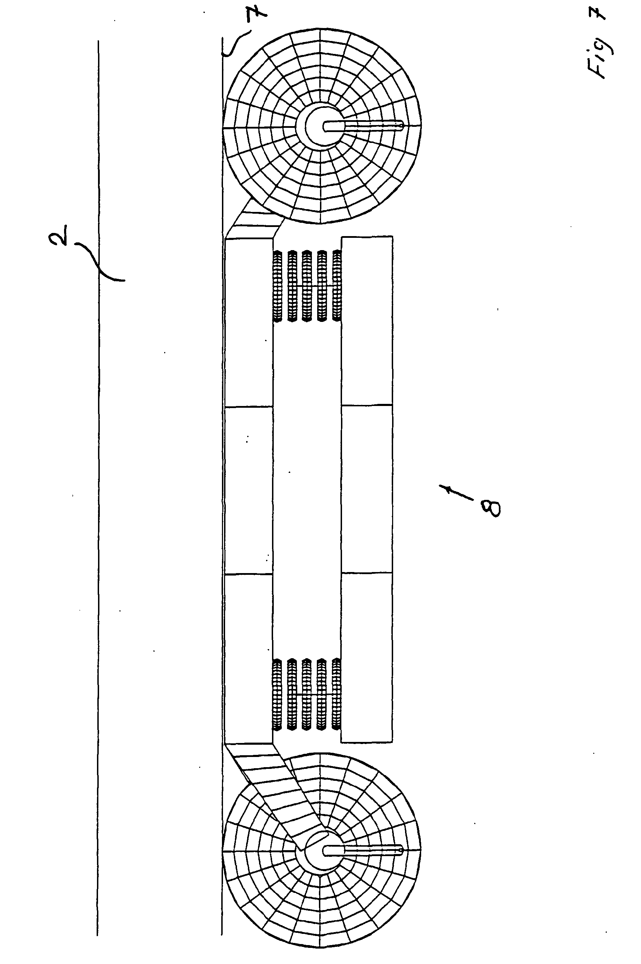

Figure 7 is a view showing an embodiment of a stationary drive/brake assembly according to the invention.

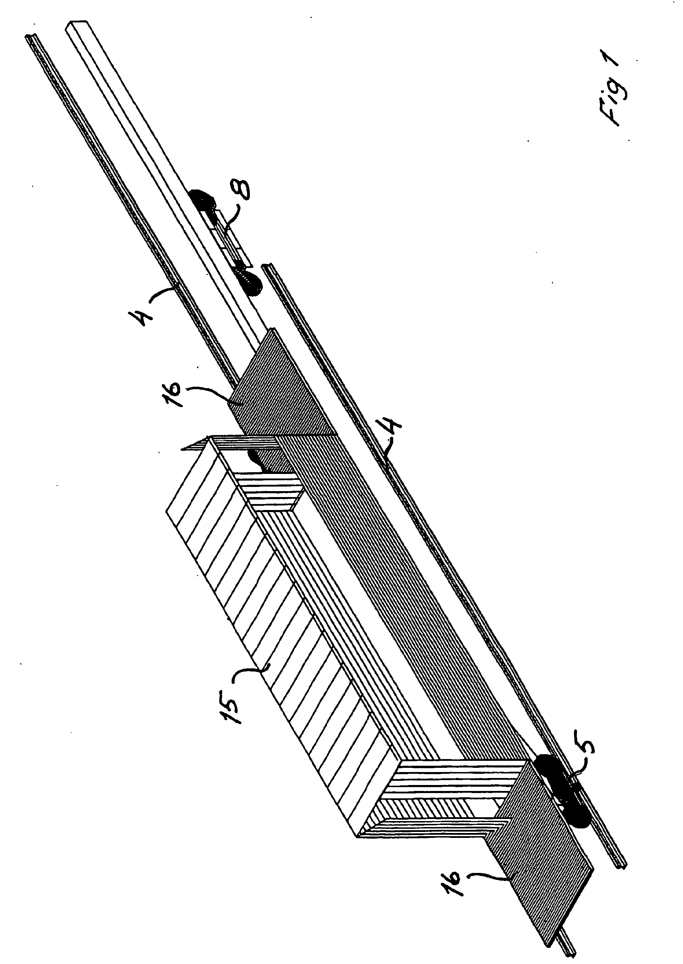

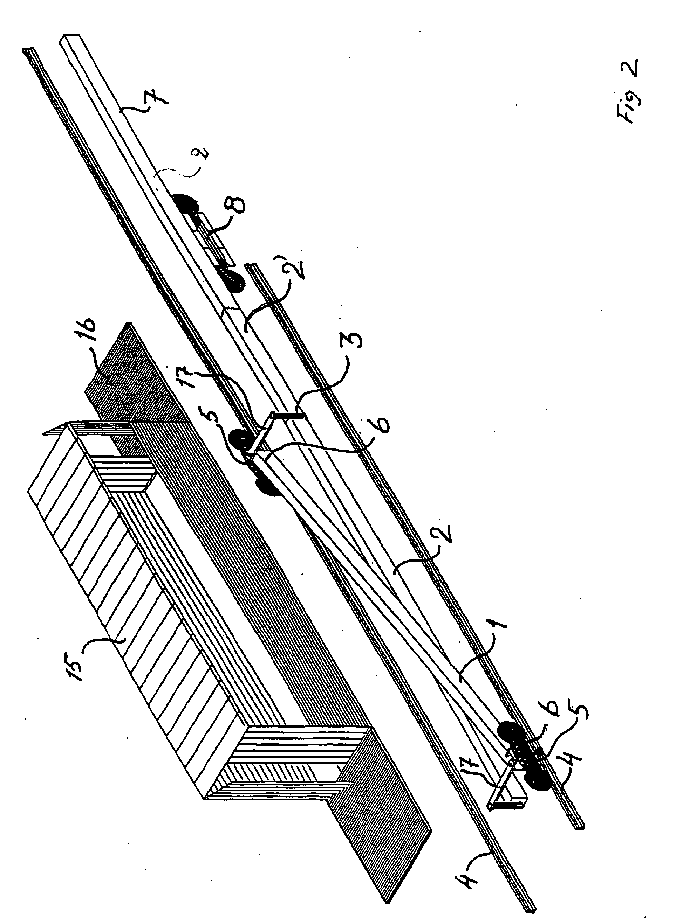

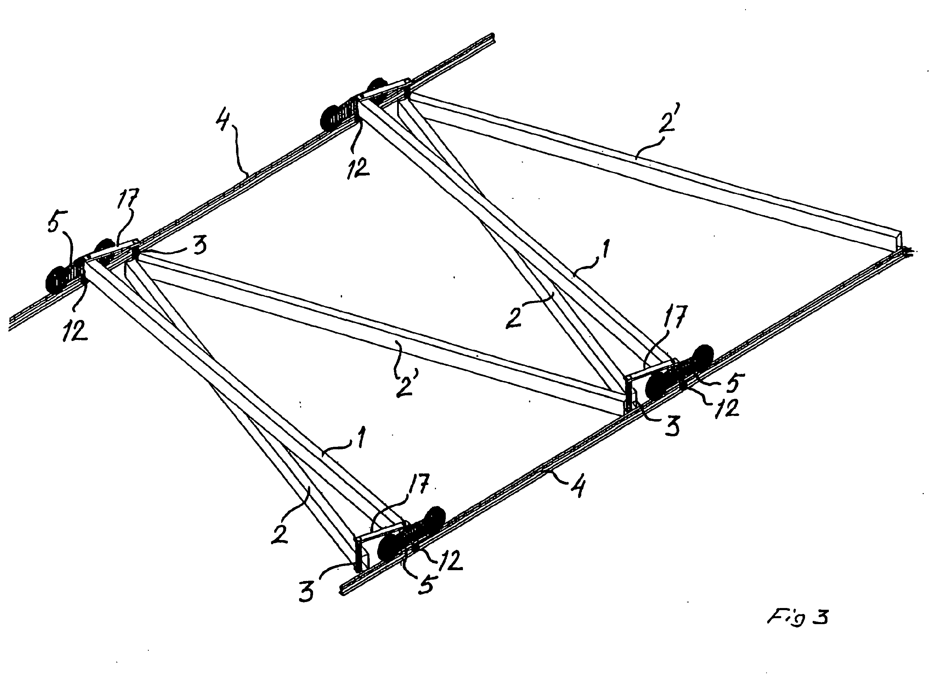

The mass transit apparatus as shown in figure 1 and 2 consists of a diagonal vehicle beam 1 and a longitudinal propulsion main beam 2 which is mainly horizontally and somewhat vertically pivotable at the linkage point 3. The vertical load generated by passengers and the tare weight of the vehicle assembly is transferred to the tracks 4 via horizontally pivotable wheel arrangements 5 attached to each end 6 of the diagonal vehicle beam 1. The linked propulsion beam 2 is rigidly attached to the vehicle beam 1 and the other end is connected to a linkage point 3. A distance beam 2' is connected to the linkage point 3 and forms an articulated extension of the propulsion or main beam 2. The other end of the distance beam 2' is mainly horizontally and somewhat vertically pivotable connected to an identical and consecutive vehicle assembly. The main function of the diagonal vehicle beam 1 is to support the vertical and torsional loads generated by the vehicle assembly. When approaching a station, the tracks 4 are gradually caused to widen as shown in figure 3 whereby consecutively connected vehicle assemblies are forced to gradually turn as shown in figure 3 and to reduce its travelling speed in the main travelling direction and vice versa when leaving a station designed for passenger embarkation and disembarkation. The linked propulsion beam 2 is provided with at least one continuous and flat drive surface 7 along the entire length of the vehicle assembly, here functionally selected to be the surface facing downwards. The function of this flat drive surface 7 is to act as the physical force transfer point between the vehicle assembly with its propulsion beam 2 and suitable driving and/or braking apparatus 8 stationary mounted along the travelling path in the vicinity of the flat drive surface 7 while the vehicle is travelling in a direction along its main longitudinal axis, that it so say between the stations. The apparatus 8 can be one or more wheels, which through friction between the wheel surface and the flat surface 7 can drive or brake the vehicle or a linear motor transferring forces to the flat surface 7 and thereby causing the vehicle or consecutively connected vehicle assemblies to accelerate, decelerate or to move at constant speed. Braking of the flat surface 7 can further be implemented by designing the apparatus 8 as a brake pad, which is pressed towards the flat surface 7 in order to cause a brake force to be transferred to the vehicle assembly or consecutively connected vehicle assemblies. The main function of the propulsion beam 2 is to provide an, in the main travelling direction, continuous drive surface 7 whereupon stationary mounted propulsion and brake means can transfer forces in the longitudinal and main travelling direction or in the opposite direction during braking. The secondary function of the propulsion beam 2 is to transfer longitudinal propulsion and brake forces between a series of consecutively connected vehicle assemblies. One wheel arrangement 5 is mainly horizontally and somewhat vertically pivotable connected to each end of the diagonal vehicle beam 1. Each wheel arrangement 5 is equipped with two wheels 9 and each wheel 9 has flanges 10 on both sides of the wheel rim 11. The function of the flanges 10 is to generate together with the tracks the rotational forces needed for the folding of the vehicle assembly and to provide guiding forces at sections outside the station areas. The wheel arrangement 5 is equipped with lateral guide wheels 12 which provide additional lateral support to the flanges 10 should the transverse forces between the wheel arrangement 5 and the track 4 exceed the flanges 10 capability to transfer such larger lateral forces. The wheel arrangement 5 is further equipped with at least one flat bogie drive surface 13 whereupon stationary mounted drive apparatus can transfer brake or acceleration forces in the main travelling direction while the vehicle assembly is horizontally rotating and changing from travelling longitudinally into travelling transversely in a side-by-side position near and at the station area.

Certain designs of the apparatus 8 require for its proper function a well-defined distance between the stationary mounted apparatus 8 and the moving flat propulsion surface 7.

This distance is specifically affected by wear of the wheels 9 located in the wheel arrangement 5 where the wear of the wheels 9 will cause the flat propulsion surface 7 to come closer to the apparatus 8. Therefore a distance adjustment device 14 is introduced in order to make it possible to adjust this distance to be within permissible limits. The distance adjustment device 14 can for example be arranged in wheel arrangement 5 attachment point to the diagonal vehicle beam 1 by a worm gear mounted between the wheel support point and the diagonal vehicle beam 1 support point. The output shaft or its connection points of the worm gear is eccentrically arranged in order to cause the vehicle beam 1 and its firmly attached propulsion beam 2 to increase or decrease its vertical distance to the apparatus 8 when the output shaft is caused to rotate through rotation of the input shaft, which is provided by a worm wheel. Another method to accurately adjust the distance between the stationary mounted apparatus 8 and the moving drive surface 7 is to adjust the position of the apparatus 8 towards or away from the drive surface 7, that is to say adjusting the apparatus in the vertical direction. This can be accomplished in a similar manner using a worm gear with an eccentric output shaft which is caused to turn a certain number of degrees by turning the input shaft manually or automatically.

The vehicle assembly design concept allows for consecutively connected vehicle assemblies to be folded from an end-to-end position to a side-by-side position via the method of widening tracks 4 as shown in figure 3. This folding into a side-by-side position is intended to take place at stations where passengers are embarking and disembarking the vehicle assembly into and out from the passenger compartment 15 while the vehicle assembly is slowly moving in the main travelling direction with its longitudinal axis rotated approximately 90 degrees from the main travelling direction. In order to facilitate such transfer to or from the stationary station platform to the passenger compartment 15 and vice versa, the vehicle assembly is provided with a platform 16 in one or both ends of the vehicle assembly which makes it possible for the passenger to enter the passenger compartment 15 without any speed difference between the platform 16 and the passenger compartment 15. At the stations around 15-30 vehicle assemblies are slowly moving in a side-by-side position and corresponding platforms 16 on each vehicle assembly are situated in a side-by-side position thereby forming a moving floor area connected to the moving vehicle assemblies. Passengers can enter or leave the moving vehicle assemblies to respectively from this moving floor area in the normal walking direction with a certain speed difference between the platform 16 and the stationary station floor. Since the walkway platform 16 is moving with the vehicle assembly, the passenger enters or leaves the passenger compartment 15 in an approximately 90 degree angle without any speed difference between the platform 16 and the passenger compartment 15.

The propulsion beam 2 linkage 3 is designed to allow for a folding in the horizontal direction of close to 180 degrees in one direction and a few degrees in the vertical direction. The large horizontal folding capability is used when the vehicle assemblies move from travelling along their longitudinal axis to a side-by-side position at the stations. The vertical angle adjustment capability is used when consecutively connected vehicle assemblies are travelling on tracks 4 which from time to time includes vertical curve radii in connection with hills and slope along the path of the tracks 4. This linkage 3 on the propulsion beam 2 incorporates a laterally mounted link arm 17, which in both ends are free to rotate around a vertical axis in the respective connection points. One end is connected to the diagonal vehicle beam 1 and the other end is connected to the upper part of the propulsion beam 2 on the side of the linkage point 3 which is not on the same side as the diagonal vehicle beam 1. The propulsion beam 2 is at the linkage point 3 at its lower part rigidly linked for vertical displacements while allowing for angular movements in other directions. Physically, this lower connection point can be arranged by the use of a spherically shaped bearing where one part is rigidly connected to the propulsion beam 2 which is rigidly connected to the diagonal vehicle beam 1 and the bearing part is rigidly connected to the distance beam 2'. A preferred embodiment of the invention has been described above. However, there are other possible embodiments within the scope of the invention. The drive surface can alternatively be arranged on a vertical side of the beam instead of on the underside or on both sides. The drive surface may be arranged on both the main beam and the distance beam. The drive surface could be in the form of a gear rack co-operating with driving toothed wheels, thus forming a kind of a rack railway. In order to further secure the rotational forces needed for the folding of the vehicle assembly and to provide guiding forces at sections outside the station areas the vehicle can be equipped with guide wheels running on vertical sides of guide tracks, these wheels being positioned e.g. on the wheel arrangement 5.

## Claims

1. A mass transit apparatus along a travelling path (4) consisting of vehicles, each of which includes a main beam (2) being attached to the vehicle and parallel to the travel direction of the vehicle, said vehicles being articulately connected in configuration so that they can be folded to a side by side position from a linear position, said vehicles being connected to each other by means of distance beams (2') pivotably connected to said vehicles at points (3) located at both end parts of said vehicles, whereat horisontal steering means are arranged to cause said vehicles to pivot horisontally from said linear position to said side by side position and in reverse along certain parts of said travelling path, whereat drive or brake motor arrangements are arranged, one part (8) of said arrangements being situated along said travelling path and co-operating with second parts (7) of said arrangements mounted on each vehicle in order to brake and accelerate said vehicles respectively, whereby the second part (7) of said motor arrangements consists of at least one drive surface which is provided onto the main beam (2) whereat said distance beam (2') is swingable in the horisontal plane in relation to the main beam (2), **characterized in that** each vehicle further includes a diagonal vehicle beam (1) and **in that** one end of said main beam (2) is swingable connected to one end of the diagonal vehicle beam (1) via a first link arm (17), the second end of said main beam (2) being swingably connected to a second end of the diagonal vehicle beam (1) via a second link arm (17), whereat both ends of the two link arms (17) are swingably connected to the diagonal vehicle beam (1) and the main beam (2) respectively.

2. A mass transit apparatus according to claim 1, **characterized in that** the drive surface (7) is extended along the distance beam (2'), which during travel in the linear direction of the vehicle is an extension in the direction of the main beam (2).

3. A mass transit apparatus according to claim 1, **characterized in that** the distance between the main beam (2) and the motor arrangements (8) situated along the travelling path, is adjustable.

4. A mass transit apparatus according to claim 3, **characterized in that** the main beam (2) is attached to wheel arrangements (5) of the vehicle via vertical distance adjustment devices (14).

5. A mass transit apparatus according to claim 3, **characterized in that** the motor arrangements (8) situated along the travelling path are fixed to the travelling path by means of vehicle distance adjustment means.

6. A mass transit apparatus according to claim 1, **characterized in that** the main beam (2) is attached to the underside of the vehicle.

7. A mass transit apparatus according to claim 1, **characterized in that** the travelling path consists of tracks on which double flanged wheels (9) of the vehicle are running.

8. A mass transit apparatus according to claim 7, **characterized in that** the vehicle is equipped with guide wheels running on vertical sides of guide tracks.

9. A mass transit apparatus according to claim 1, **characterized in that** the vehicle is supported on wheel arrangements (5) in the form of bogies consisting of a bogie frame, which has at least one flat drive surface (13) on which stationary mounted drive apparatus can transfer brake or acceleration forces in the main travelling direction of the vehicle.

10. A mass transit apparatus according to claim 1, **characterized in that** the vehicle is provided with a platform (16) in one or both ends of the vehicle, the platforms of the vehicles forming a moving floor when the vehicles are travelling in a side-by-side position at a station.

## Patentansprüche

1. Eine Massentransportvorrichtung entlang eines Fahrweges (4), die aus Fahrzeugen besteht, von denen jedes einen Hauptträger (2) aufweist, der am Fahrzeug befestigt und parallel zu der Fahrtrichtung des Fahrzeuges ist, wobei diese Fahrzeuge gelenkig in einer Anordnung so verbunden sind, daß sie von einer geradlinigen Position in eine Seite-an-Seite-Position gefaltet werden können, wobei diese Fahrzeuge mittels Abstandsträgern (2') miteinander verbunden sind, die schwenkbar mit den Fahrzeugen an Punkten (3) verbunden sind, die an beiden Endabschnitten der Fahrzeuge angeordnet sind, an denen horizontale Steuermittel so angeordnet sind, daß sie ein horizontales Schwenken der Fahrzeuge von der geradlinigen Position zu der Seite-an-Seite-Position und entgegengesetzt entlang bestimmter Teile des Fahrweges bewirken, an denen Antriebs- oder Bremsmotoranordnungen angeordnet sind, wobei ein Teil (8) dieser Anordnungen entlang des Fahrweges gelegen ist und mit zweiten Teilen (7) dieser Anordnungen zusammenwirkt, die an jedem Fahrzeug befestigt sind, um die Fahrzeuge entsprechend zu bremsen und zu beschleunigen, wobei der zweite Teil (7) der Motoranordnungen aus mindestens einer Antriebsfläche besteht, die auf dem Hauptträger (2) vorgesehen ist, woran der Abstandsträger (2') in der horizontalen Ebene in Bezug zum Hauptträger (2) schwenkbar ist, **dadurch gekennzeichnet, daß** jedes Fahrzeug desweiteren einen diagonalen Fahrzeugträger (1) aufweist und daß ein Ende des Hauptträgers (2) über einen ersten Verbindungsarm (17) mit einem Ende des diagonalen Fahrzeugträgers (1) schwenkbar verbunden ist und das zweite Ende des Hauptträgers (2) über einen zweiten Verbindungsarm (17) schwenkbar mit einem zweiten Ende des diagonalen Fahrzeugträgers (1) verbunden ist, wobei beide Enden der zwei Verbindungsarme (17) schwenkbar mit dem diagonalen Fahrzeugträger (1) bzw. dem Hauptträger (2) verbunden sind.

2. Eine Massentransportvorrichtung nach Anspruch 1, **dadurch gekennzeichnet, daß** die Antriebsfläche (7) entlang des Abstandsträgers (2') verlängert ist, der während der Fahrt in der geradlinigen Richtung des Fahrzeuges eine Verlängerung in der Richtung des Hauptträgers (2) ist.

3. Eine Massentransportvorrichtung nach Anspruch 1, **dadurch gekennzeichnet, daß** der Abstand zwischen dem Hauptträger (2) und den Motoranordnungen (8), die entlang des Fahrweges gelegen sind, einstellbar ist.

4. Eine Massentransportvorrichtung nach Anspruch 3, **dadurch gekennzeichnet, daß** der Hauptträger (2) an Räderanordnungen (5) des Fahrzeuges mit vertikalen Abstandseinstelleinrichtungen (14) befestigt ist.

5. Eine Massentransportvorrichtung nach Anspruch 3, **dadurch gekennzeichnet, daß** die Motoranordnungen (8), die entlang des Fahrweges gelegen sind, an dem Fahrweg mittels Fahrzeugabstandseinstelleinrichtungen befestigt sind.

6. Eine Massentransportvorrichtung nach Anspruch 1, **dadurch gekennzeichnet, daß** der Hauptträger (2) an der Unterseite des Fahrzeugs befestigt ist.

7. Eine Massentransportvorrichtung nach Anspruch 1, **dadurch gekennzeichnet, daß** der Fahrweg aus Geleisen besteht, auf denen Räder (9) der Fahrzeuge mit doppelten Spurkränzen laufen.

8. Eine Massentransportvorrichtung nach Anspruch 7, **dadurch gekennzeichnet, daß** das Fahrzeug mit Führungsrädern ausgestattet ist, die an vertikalen Seiten von Führungsspuren laufen.

9. Eine Massentransportvorrichtung nach Anspruch 1, **dadurch gekennzeichnet, daß** das Fahrzeug von Räderanordnungen (5) in der Form von Unterwagen getragen wird, die aus einem Unterwagengestell bestehen, das mindestens eine flache Antriebsfläche (13) aufweist, auf die stationär befestigte Antriebsvorrichtungen Brems- oder Beschleunigungskräfte in der Hauptbewegungsrichtung des Fahrzeuges übertragen können.

10. Eine Massentransportvorrichtung nach Anspruch 1, **dadurch gekennzeichnet, daß** das Fahrzeug mit einer Plattform (16) an einem oder an beiden Enden des Fahrzeuges ausgestattet ist, wobei die Plattformen der Fahrzeuge einen bewegten Boden bilden, wenn die Fahrzeuge in der Seite-an-Seite-Position in einer Haltestelle fahren.

## Revendications

1. Un appareil de transport en commun le long d'un chemin de déplacement (4) constitué de véhicules, chacun de ces véhicules comprenant une poutre principale (2) attachée au véhicule et parallèle à la direction de déplacement du véhicule, lesdits véhicules étant connectés de façon articulée de sorte qu'ils puissent être repliés en une position côté à côte à partir d'une position linéaire, lesdits véhicules étant connectés les uns aux autres par l'intermédiaire de poutres d'écartement (2') connectées de façon pivotante auxdits véhicules en des points (3) situés aux deux parties d'extrémité desdits véhicules, au niveau desquels des moyens de braquage horizontaux sont disposés pour permettre auxdits véhicules de pivoter horizontalement de ladite position linéaire vers ladite position côte à côte et en marche arrière le long de certaines parties du chemin de déplacement, au niveau desquels des dispositifs de motorisation de freinage ou de d'entraînement sont disposés, une partie (8) desdits dispositifs étant située le long dudit chemin de déplacement et coopérant avec des secondes parties (7) desdits dispositifs montés sur chaque véhicule de façon à freiner et accélérer lesdits véhicules respectivement, de sorte que la seconde partie (7) desdits agencements de motorisation est constituée d'au moins une surface d'entraînement qui est prévue sur la poutre principale (2), dans lesquels ladite poutre d'écartement (2') peut pivoter dans le plan horizontal par rapport à la poutre principale (2), **caractérisé en ce que** chaque véhicule comprend en outre une poutre diagonale de véhicule (1), une extrémité de ladite poutre principale étant montée pivotante sur une extrémité de la poutre diagonale de véhicule (1) par l'intermédiaire d'un premier bras de liaison (17), la deuxième extrémité de ladite poutre principale (2) étant montée pivotante sur la deuxième extrémité de la poutre diagonale de véhicule (14) par l'intermédiaire d'un second bras (17), dans lequel les deux extrémités des deux bras de liaison (17) sont montées pivotantes respectivement sur ladite poutre diagonale de véhicule (1) et sur ladite poutre principale (2).

2. Un appareil de transport en commun selon la revendication 1, **caractérisé en ce que** la surface d'entraînement (7) s'étend le long de la poutre d'écartement (2'), qui est une extension dans la direction de la poutre principale (2) durant un déplacement dans la direction linéaire du véhicule.

3. Un appareil de transport en commun selon la revendication 1, **caractérisé en ce que** la distance entre la poutre principale (2) et les dispositifs de motorisation (8) situés le long du chemin de déplacement, est ajustable.

4. Un appareil de transport en commun selon la revendication 3, **caractérisé en ce que** la poutre principale (2) est attachée à un dispositif de volant (5) du véhicule par l'intermédiaire d'organes d'ajustement de la distance verticale (14).

5. Un appareil de transport en commun selon la revendication 3, **caractérisé en ce que** les dispositifs de motorisation (8) situés le long du chemin de déplacement sont fixés au chemin de déplacement par l'intermédiaire de moyens d'ajustement de la distance du véhicule.

6. Un appareil de transport en commun selon la revendication 1, **caractérisé en ce que** la poutre principale (2) est attachée à la face inférieure du véhicule.

7. Un appareil de transport en commun selon la revendication 1, **caractérisé en ce que** le chemin de déplacement est constitué de rails sur lesquels des roues à doubles flasques (9) du véhicule se déplacent.

8. Un appareil de transport en commun selon la revendication 7, **caractérisé en ce que** le véhicule est équipé de roues de guidage se déplaçant sur les bords verticaux des rails de guidage.

9. Un appareil de transport en commun selon la revendication 1, **caractérisé en ce que** le véhicule est supporté par des organes de roulement (5) sous la forme de bogies constitués d'un cadre de bogie, qui présente au moins une surface d'entraînement plate (13) sur laquelle un organe d'entraînement monté stationnaire peut transférer des efforts de freinage ou d'accélération dans la direction de déplacement principale du véhicule.

10. Un appareil de transport en commun selon la revendication 1, **caractérisé en ce que** le véhicule est muni d'une plate-forme (16) à une ou deux extrémités du véhicule, les plates-formes des véhicules formant un sol mobile lorsque les véhicules se déplacent en position côte à côte dans une station.
